# EUROPEAN PATENT APPLICATION

(11) **EP 4 730 012 A1**
(43) Date of publication of application: **22.04.2026**
(21) Application number: 23769097.9
(22) Date of filing: 30.06.2023
(51) Int. Cl.: G02B 27/01, G03B 21/14

(54) **DISPLAY APPARATUS**

(30) Priority: 15.06.2023 CN 202310716758
(71) Applicant: Wuhan China Star Optoelectronics Technology Co., Ltd., Wuhan, Hubei 430079 (CN)
(72) Inventor: YANG, Huanli, Wuhan Hubei 430079 (CN); HE, Rui, Wuhan Hubei 430079 (CN)
(74) Representative: Petraz, Gilberto Luigi
(86) International application number: PCT/CN2023/104765
(87) International publication number: WO 2024/254919

(57) **Abstract**

Embodiments of the present disclosure disclose display devices. The display device includes two optical machines. Each optical machine includes a display screen and an optical element. The display screen has a first lateral surface and a second lateral surface. The optical element has a first outline and a second outline. A minimum value of a distance between the first outline and an optical axis of the optical element is less than a minimum value of a distance between the second outline and the optical axis of the optical element. In the present disclosure, a size of the optical element may be reduced by arranging an inner side of the optical element as a special-shaped structure.

## Description

### TECHNICAL FIELD

The present disclosure relates to the field of display technologies, and in particular, to display devices.

### BACKGROUND

With the continuous improvement of people's display requirements for consumer electronic products, virtual/augmented reality display technology has attracted more and more attention. The virtual reality (VR) has a better immersive experience and is increasingly favored by consumers. It can be seen that the core of the virtual reality lies in immersion, and the key to achieving immersion is panorama. A field-of-view (FOV) angle represents a panoramic angle, which is a symbolic parameter that embodies the core technology of optics. For the currently available VR products, a factor that limits a view field of the VR is an optical-mechanical lens. In order to obtain a better view field (a larger FOV angle), it is generally used to shorten a distance between an observation point (the eyes) and the lens or increase a size of the lens. However, a space for shortening the distance between the eyes and the lens is limited, and excessive reduction will affect the wearing comfort; and too large the lens will increase a weight of the product and affect the visual experience.

### SUMMARY OF THE INVENTION

Embodiments of the present disclosure provide display devices, which may solve the problem that the existing display devices cannot reduce the weight while achieving a large FOV angle.

Embodiment of the present disclosures provide display devices. The display device includes two optical machines arranged side by side along a first direction, and each of the optical machines includes:
a display screen, having a first lateral surface and a second lateral surface oppositely arranged along the first direction, the first lateral surface being adjacent to the other one of the optical machines; and
an optical element, disposed on a display side of the display screen, configured to process display images of the display screen and transmit them to a corresponding observation point, and having a first outline and a second outline oppositely arranged along the first direction, the first outline being adjacent to the other one of the optical machines;
herein, a main optical axis of the optical element passes through the display screen, and is disposed on a side of a geometric center of the display screen adjacent to the other one of the optical machines; and a minimum value of a distance between the first outline and the main optical axis of the optical element is less than a minimum value of a distance between the second outline and the main optical axis of the optical element.

Optionally, in some embodiments of the present disclosure, a minimum value of a distance between the first lateral surface and the main optical axis of the optical element is less than a minimum value of a distance between the second lateral surface and the main optical axis of the optical element.

Optionally, in some embodiments of the present disclosure, the display screen has a third lateral surface and a fourth lateral surface oppositely arranged along a second direction, the third lateral surface is connected between the first lateral surface and the second lateral surface, the fourth lateral surface is connected between the first lateral surface and the second lateral surface, and the second direction forms an angle with the first direction; and a first notch is defined at a junction of the third lateral surface and the first lateral surface.

Optionally, in some embodiments of the present disclosure, the optical element has a third outline and a fourth outline oppositely arranged along the second direction; the third outline is connected between the first outline and the second outline, and the fourth outline is connected between the first outline and the second outline; and a minimum value of a distance between the third outline and the main optical axis of the optical element is less than a minimum value of a distance between the second outline and the main optical axis of the optical element.

Optionally, in some embodiments of the present disclosure, the optical element has a third outline and a fourth outline oppositely arranged along the second direction; the third outline is connected between the first outline and the second outline, and the fourth outline is connected between the first outline and the second outline; and a minimum value of a distance between the fourth outline and the main optical axis of the optical element is less than a minimum value of a distance between the second outline and the main optical axis of the optical element.

Optionally, in some embodiments of the present disclosure, a second notch is defined at a junction of the fourth lateral surface and the first lateral surface.

Optionally, in some embodiments of the present disclosure, a third notch is defined at a junction of the fourth lateral surface and the second lateral surface.

Optionally, in some embodiments of the present disclosure, a fourth notch is defined at a junction of the third lateral surface and the second lateral surface.

Optionally, in some embodiments of the present disclosure, a connection surface formed by the first notch is 145° to the first lateral surface.

Optionally, in some embodiments of the present disclosure, a connection surface formed by the first notch is 145° to the third lateral surface.

Optionally, in some embodiments of the present disclosure, a cross-section of the display screen is a regular octagon.

Optionally, in some embodiments of the present disclosure, the first outline, the second outline, the third outline, and the fourth outline are arc-shaped, and curvatures of the first outline, the second outline, the third outline, and the fourth outline are different.

Optionally, in some embodiments of the present disclosure, the first outline, the third outline, and the fourth outline are straight lines, the second outline is arc-shaped, and a curvature center of the second outline is located on the main optical axis of the optical element; and an arc is connected between the first outline and the third outline, and another arc is connected between the first outline and the fourth outline.

Optionally, in some embodiments of the present disclosure, in a direction along the main optical axis of the optical element, an orthographic projection of the display screen on the optical element is located within the optical element.

Optionally, in some embodiments of the present disclosure, a minimum value of a distance between the fourth outline and the main optical axis of the optical element is less than the minimum value of the distance between the third outline and the main optical axis of the optical element.

Optionally, in some embodiments of the present disclosure, the optical element has an optical center, and the main optical axis of the optical element passes through the optical center; a first connecting line is defined to connect optical centers of optical elements of the two optical machines, a second connecting line is defined to connect geometric centers of display screens of the two optical machines, and the first connecting line is parallel to the second connecting line; and the main optical axis of the optical element passes through the second connecting line.

Optionally, in some embodiments of the present disclosure, the optical element has an optical center, and the main optical axis of the optical element passes through the optical center; a first connecting line is defined to connect optical centers of optical elements of the two optical machines, a second connecting line is defined to connect geometric centers of display screens of the two optical machines, and the first connecting line is parallel to the second connecting line; and the main optical axis of the optical element and the second connecting line form an angle and are non-intersected.

Optionally, in some embodiments of the present disclosure, in a viewing direction along the first direction, a sum of field-of-view (FOV) angles at corresponding observation points of the two optical machines is greater than or equal to 120°.

Optionally, in some embodiments of the present disclosure, in a viewing direction along the first direction, an overlapped image angle of FOV angles at corresponding observation points of the two optical machines is greater than or equal to 80°.

Optionally, in some embodiments of the present disclosure, in a viewing direction along the second direction, a sum of FOV angles at corresponding observation points of the two optical machines is greater than or equal to 90°.

### BENEFICIAL EFFECTS

In the embodiments of the present disclosure, the display device includes two optical machines arranged side by side along the first direction, each of the optical machines includes a display screen and an optical element, and the display screen has a first lateral surface and a second lateral surface oppositely arranged along the first direction, the first lateral surface is adjacent to the other one of the optical machines, the optical element is located on a display side of the display screen, and the optical element is configured to process display images of the display screen and transmit them to a corresponding observation point; the optical element has a first outline and a second outline oppositely arranged along the first direction, and the first outline is adjacent to the other one of the optical machines. A main optical axis of the optical element passes through the display screen and is located on a side of a geometric center of the display screen adjacent to the other one of the optical machines. A minimum value of a distance between the first outline and the main optical axis of the optical element is less than a minimum value of a distance between the second outline and the main optical axis of the optical element. In the present disclosure, the minimum value of the distance between the first outline and the main optical axis of the optical element is less than the minimum value of the distance between the second outline and the main optical axis of the optical element, so that an inner side of the optical element may be a special-shaped structure. That is, on a condition that a distance between an observation point and the optical element is the same and a horizontal FOV angle is the same, a size of the optical element may be reduced, thereby reducing a weight of the display device and improving user experience.

### DESCRIPTION OF DRAWINGS

In order to more clearly illustrate the technical solutions in the embodiments of the present disclosure, the drawings that need to be used in the description of the embodiments will be briefly introduced below. Obviously, the drawings in the following description are only some embodiments of the present disclosure. For those skilled in the art, other drawings may also be obtained based on these drawings without any creative effort.
FIG. 1 is a schematic diagram of an existing display device.
FIG. 2 is a schematic top view of an existing optical machine.
FIG. 3 is a schematic structural view of a display device according to an embodiment of the present disclosure.
FIG. 4 is a schematic top view of an optical machine according to an embodiment of the present disclosure.
FIG. 5 is a schematic top view of an optical machine according to another embodiment of the present disclosure.

### Reference numerals:

10, display device;
100, optical machine; 110, 110a, display screen; 111, first lateral surface; 112, second lateral surface; 113, third lateral surface; 114, fourth lateral surface; 115, first notch; 116, second notch; 117, third notch; 118, fourth notch; 120, 120a, optical element; 121, first outline; 122, second outline; 123, third outline; 124, fourth outline; 125, arc; 130, magnified image;
X, first direction; Y, second direction; O, O1, main optical axis; P, P1, geometric center; Q, Q1, optical center; S, observation point; L, first connecting line; N, second connecting line.

### EMBODIMENTS OF THE INVENTION

The following will clearly and completely describe the technical solutions in the embodiments of the present disclosure with reference to the accompanying drawings in the embodiments of the present disclosure. Obviously, the described embodiments are only some of the embodiments of the present disclosure, not all of them. Based on the embodiments in the present disclosure, all other embodiments obtained by those skilled in the art without creative efforts fall within the protection scope of the present disclosure. In addition, it should be understood that the specific embodiments described here are only used to illustrate and explain the present disclosure, not intended to limit the present disclosure. In this disclosure, unless stated otherwise, the used orientational terms such as "up" and "down" generally refer to the up and down of the device in actual use or working state, specifically the orientations in the drawings; The terms "inside" and "outside" refer to the profile of the installation.

Embodiments of the present disclosure provide display devices, which will be described in detail below. It should be noted that the description sequence of the following embodiments is not intended to limit the preferred sequence of the embodiments.

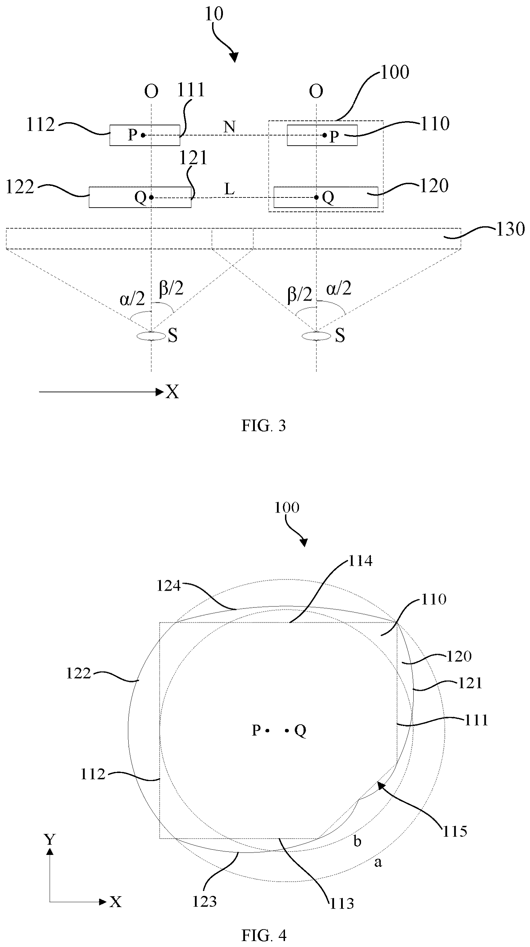

As illustrated in FIG. 3, the display device 10 includes two optical machines 100 arranged side by side along a first direction X. When the display device 10 is used, the two human eyes correspond to the two optical machines 100, respectively, and a position of the human eye corresponds to an observation point S of the optical machine 100. The first direction X is a distribution direction of the two human eyes, that is, a horizontal direction, and a direction indicated by an arrow in the first direction X is a distribution direction of the left and right eyes.

Each optical machine 100 includes a display screen 110 and an optical element 120. The optical element 120 may include one or more lenses. The optical element 120 is located on a display side of the display screen 110. The display screen 110 is configured to display images, and the optical element 120 is configured to process the display images of the display screen 110 and transmit them to corresponding observation point S. That is to say, when the display device 10 is used, the optical elements 120 of the display screen 110 generate magnified images 130 at a distance through refraction or reflection of the optical elements 120, and then are received by the two human eyes, so that the two human eyes watch the magnified images 130 to realize immersive vision.

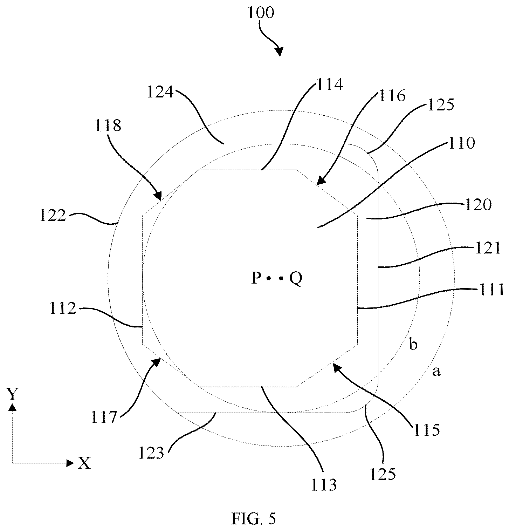

As illustrated in FIG. 4 and FIG. 5 (a structure of the optical machine corresponding to the left eye), the display screen 110 has a first lateral surface 111 and a second lateral surface 112 oppositely arranged along the first direction X. The first lateral surface 111 is adjacent to the other optical machine 100, that is, the first lateral surface 111 is an inner side near the nose when viewed by human eyes, and the second lateral surface 112 is an outer side when viewed by human eyes. Correspondingly, the optical element 120 has a first outline 121 and a second outline 122 oppositely disposed along the first direction X, and the first outline 121 is close to another optical machine 100. For the two human eyes, when observing, a positional relationship between the first lateral surface 111 and the first outline 121 is related to an inner edge of the magnified image 130 observed by the human eye, and a positional relationship between the second lateral surface 112 and the second outlines 122 is related to an outer edge of the magnified image 130 observed by the human eye, thereby affecting a horizontal FOV angle of the human eye at the corresponding observation point S, and then affecting the effect of the immersive experience.

It should be noted that the outline mentioned in the embodiments of the present disclosure is an outer outline of an orthographic projection of the optical element 120 on a plane where the display screen 110 is located. The first outline 121 corresponds to the first lateral surface 111 of the display screen 110, and the second outline 122 corresponds to the second lateral surface 112 of the display screen 110, that is, the first outline 121 is the inner side near the nose when viewed by human eyes, and the second outline 122 is the outer side when viewed by human eyes.

Herein, a main optical axis O of the optical element 120 passes through the display screen 110 and is located on a side of a geometric center P of the display screen 110 close to the other optical machine 100. It should be noted that, for the optical element 120, its main optical axis O or optical center Q is fixed after the optical element 120 is formed, irrelevant to whether the optical element 120 is subsequently cut into other shapes, and the geometric center P of the display screen 110 will change as the shape of the display screen 110 changes.

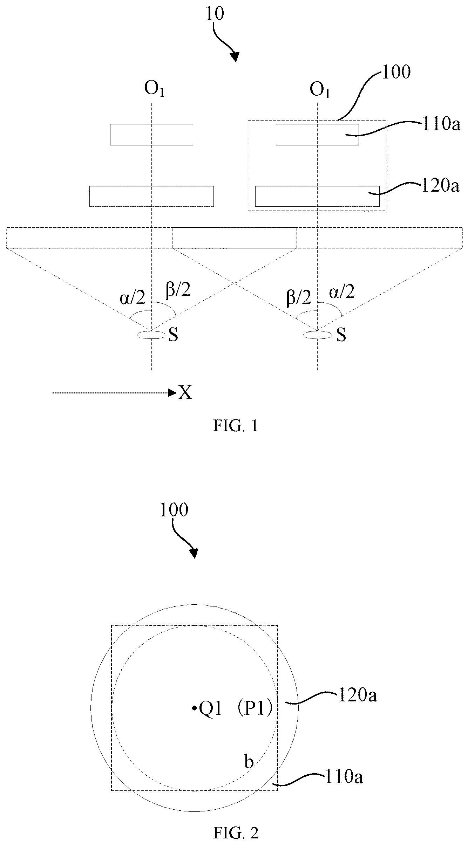

As illustrated in FIG. 1 and FIG. 2, when the display screen 110a and the optical element 120a are both regular graphics and are assembled along the main optical axis O1 of the optical element 120a, the geometric center P1 of the display screen 110a is located on the main optical axis O1 of the optical element 120a, that is, the main optical axis O1 of the optical element 120a passes through the optical center Q1 of the optical element 120a and the geometric center P1 of the display screen 110a, where a dotted circle b is a theoretical viewing angle range of a single optical machine 100 before cut with a special shape. As illustrated in FIG. 4 and FIG. 5, under a same horizontal FOV angle, when the main optical axis O of the optical element 120 is located on the side of the geometric center P of the display screen 110 near the other display screen 110, that is, the geometric center P of the display screen 110 is shifted toward the second lateral surface 112, it means that the display screen 110 is misaligned in the first direction X relative to the optical element 120, or the first lateral surface 111 of the display screen 110 is cut, where a dotted circle a is an outer outline of the optical element 120 before the special-shaped cutting.

Correspondingly, a minimum value of a distance between the first outline 121 and the main optical axis O of the optical element 120 is less than a minimum value of a distance between the second outline 122 and the main optical axis O of the optical element 120, that is, the inner side of the optical element 120 is cut with a special shape and the first outline 121 (as illustrated in FIG. 4 and FIG. 5, the first outline 121 after cut with a special shape is located in the dotted circle a) is formed, so that a size of the optical element 120 may be reduced on a condition that the horizontal FOV angle remains unchanged, thus reducing an overall weight of the display device 10 and improving user experience.

It should be noted that, for a single eye, the horizontal FOV angle (α/2) refers to an angle between lines respectively connecting the horizontal edges of the magnified image 130 formed after a single image of the display screen 110 magnified by optical element 120 and the human eye. For both eyes, an overall horizontal FOV angle refers to a sum of two angles between lines and the main optical axis O of the optical element 120, and each of the lines connects the human eye and an outer edge of a corresponding one of the magnified images 130 formed after two images of the display screen 110 magnified correspondingly by the optical elements 120.

In addition, according to the visual characteristics of the two human eyes, an area corresponding to the nose between the two eyes will produce a certain occlusion to the actual viewing angle, and the occlusion part corresponds to the inner side of the magnified image 130, so when the inner side of the optical element 120 is cut with a special shape, although the FOV angle of the inner side of the single eye will be reduced, the overall horizontal FOV angle of the two eyes will remain unchanged, which will not have a large impact on the overall immersive vision, and at the same time reduce the overall weight of the display device 10. That is to say, when cutting the inner side of the optical element 120 with a special shape, the cutting size may be adjusted according to the area corresponding to the nose to block the viewing angle, so as to avoid a great impact on the immersive experience while reducing the size of the optical element 120

In the embodiments of the present disclosure, the display device 10 includes two optical machines 100 arranged side by side along the first direction X. Each optical machine 100 includes the display screen 110 and the optical element 120. The display screen 110 has the first lateral surface 111 and the second lateral surface 112 oppositely arranged along the first direction X, and the first lateral surface 111 is close to the other optical machine 100. The optical element 120 is located on the display side of the display screen 110, and the optical element 120 is configured to process the display images of the display screen 110 and transmit them to corresponding observation point S. The optical element 120 has the first outline 121 and the second outline 122 oppositely disposed along the first direction X. The main optical axis O of the optical element 120 passes through the display screen 110 and is located on the side of the geometric center P of the display screen 110 close to the other optical machine 100. The minimum value of the distance between the first outline 121 and the main optical axis O of the optical element 120 is less than the minimum value of the distance between the second outline 122 and the main optical axis O of the optical element 120. In the disclosure, the minimum value of the distance between the first outline 121 of the optical element 120 and the main optical axis O is arranged to be less than the minimum value of the distance between the second outline 122 and the main optical axis O, so that the inner side of the optical element 120 is cut into a special-shaped structure. That is, on a condition that a distance between the observation point S and the optical element 120 is the same and the horizontal FOV angle is the same, the size of the optical element 120 may be reduced, thereby reducing the weight of the display device 10 and improving user experience; On the contrary, on a condition of the same aperture corresponding to the optical element 120, a larger horizontal FOV angle may be achieved, so as to improve the immersive visual experience.

Optionally, as illustrated in FIG. 4 and FIG. 5, a minimum value of a distance between the first lateral surface 111 of the display screen 110 and the main optical axis O of the optical element 120 is less than a minimum value of a distance between the second lateral surface 112 and the main optical axis O of the optical element 120. That is to say, the inner side of the display screen 110 may also be cut with a special shape (as illustrated in FIG. 4 and FIG. 5, the first lateral surface 111 after cut with a special shape is at least partially located in the dotted circle b), so as to reduce the size of the display screen 110 while keeping the overall horizontal FOV angle unchanged, the size of the display screen 110 is reduced, thereby reducing the weight of the display device 10, improving user experience, and at the same time increasing the effective utilization rate of the display screen 110.

It should be noted that since the overall horizontal FOV angle is related to the outer edges of the magnified images 130 formed after two display images of the display screens 110 are correspondingly magnified by the optical elements 120, in order to ensure that the outer edges of the magnified images 130 formed by the display screens 110 and the optical elements after the special-shaped cut remain unchanged (as illustrated in FIG. 4 and FIG. 5, the second lateral surface 112 is always outside the dotted circle b), the inner sides of the display screens 110 and the optical elements 120 are deformed in the embodiments of the present disclosure, so that the sizes of the optical elements 120 and the sizes of the display screens 110 are reduced while keeping the overall horizontal FOV angle unchanged.

Optionally, as illustrated in FIG. 4, the display screen 110 has a third lateral surface 113 and a fourth lateral surface 114 oppositely arranged along a second direction Y. The third lateral surface 113 is connected between the first lateral surface 111 and the second lateral surface 112. The fourth lateral surface 114 is connected between the first lateral surface 111 and the second lateral surface 112. The second direction Y forms an angle with the first direction X. It should be noted that the third lateral surface 113 is a lower side when viewed by human eyes, the fourth lateral surface 114 is an upper side when viewed by human eyes, and the second direction Y is a vertical direction observed by human eyes. For the two human eyes, when observing, a position of the third lateral surface 113 is related to a lower edge of the magnified image 130 observed by the two human eyes, and a position of the fourth lateral surface 114 is related to an upper edge of the magnified image 130 observed by the human eye, thus affecting a vertical FOA angle of the two human eyes at the corresponding observation point S.

Herein, a first notch 115 is formed at a junction of the third lateral surface 113 and the first lateral surface 111, that is, the first notch 115 is formed at a lower right corner corresponding to an observation area of the human eye (left eye). Correspondingly, a position of the optical element 120 corresponding to the first notch 115 may also be further cut with a special shape. It should be noted that the occlusion area corresponding to the nose between the two eyes is also located at the lower right corner corresponding to the observation area of the human eye (left eye). By forming the first notch 115 at the position, an invalid display area may be effectively removed, which may further reduce the size of the display screen 110, reduce the overall weight of the display device 10, improve the effective utilization rate of the display screen 110, and at the same time, avoid a large impact on the immersive experience.

In some embodiments, the first notch 115 may be formed at a cutting angle of 45° at the junction of the third lateral surface 113 and the first lateral surface 111, that is, a connection surface formed by the first notch 115 is 145° to both the first lateral surface 111 and the third lateral surface 113. Herein, the cutting angle of the first notch 115 may be designed and adjusted according to an actual occlusion angle of the occlusion area corresponding to the nose between the eyes o, so as to ensure a better immersive experience.

Optionally, the optical element 120 has a third outline 123 and a fourth outline 124 oppositely arranged along the second direction Y. The third outline 123 is connected between the first outline 121 and the second outline 122, and the fourth outline 124 is connected between the first outline 121 and the second outline 122. That is, the third outline 123 corresponds to the third lateral surface 113 of the display screen 110, and the fourth outline 124 corresponds to the fourth lateral surface 114 of the display screen 110. For the two human eyes, when observing, a positional relationship between the third lateral surface 113 and the third outline 123 is related to a lower side edge of the magnified image 130 observed by the human eye, and a positional relationship between the fourth lateral surface 114 and the fourth outlines 124 is related to an upper edge of the magnified image 130 observed by the human eye, thus affecting the vertical FOA angle (β/2) of the human eye at the corresponding observation point S, thereby affecting the effect of the immersive experience.

It should be noted that, according to the visual characteristics of the two human eyes, in the actual observation process, the overall vertical FOV angle of the two human eyes is less than the horizontal FOV angle, that is, the entire observation field of the two human eyes is approximately elliptical, that is, the upper and lower sides of the optical element 120 and/or the display screen 110 may be cut in different shapes to maximize the utilization of the optical element 120 and/or the display screen 110.

In some embodiments, a minimum value of a distance between the third outline 123 and the main optical axis O of the optical element 120 is less than a minimum value of a distance of the second outline 122 and the main optical axis O of the optical element 120. That is, the lower side of the optical element 120 is cut with a special shape and form the third outline 123 (as illustrated in FIG. 4 and FIG. 5, the third outline 123 after cut with a special shape is located in the dotted circle a). Therefore, on a condition that the optical machine 100 has a sufficient vertical FOV angle, the size of the optical element 120 may be further reduced, thereby reducing the overall weight of the display device 10 and improving user experience.

Correspondingly, the third lateral surface 113 of the display screen 110, that is, the lower side of the display screen 110 may also be cut (as illustrated in FIG. 4 and FIG. 5, the third lateral surface 113 after cut with a special shape is at least partially located in the dotted circle b), so as to reduce a width between the upper and lower sides of the display screen 110. Therefore, on a condition that the optical machine 100 has a sufficient vertical FOV angle, the size of the display screen 110 may be further reduced, thereby improving the effective utilization of the display screen 110, reducing the overall weight of the display device 10, and improving user experience.

In some other embodiments, a minimum value of a distance between the fourth outline 124 and the main optical axis O of the optical element 120 is less than a minimum value of a distance between the second outline 122 and the main optical axis O of the optical element 120. That is, the upper side of the optical element 120 may be cut with a special shape and form a fourth outline 124 (as illustrated in FIG. 4 and FIG. 5, the fourth outline 124 after cut with a special shape is located in the dotted circle a). Therefore, on a condition that the optical machine 100 has a sufficient vertical FOV angle, the size of the optical element 120 may be further reduced, thereby reducing the overall weight of the display device 10 and improving user experience.

Correspondingly, the fourth lateral surface 114 of the display screen 110, that is, the upper side of the display screen 110, may also be cut (as illustrated in FIG. 4 and FIG. 5, the fourth lateral surface 114 after cut with a special shape is at least partially located in the dotted circle b), so as to reduce a width between the upper and lower sides of the display screen 110. Therefore, on a condition that the optical machine 100 has a sufficient vertical FOV angle, the size of the display screen 110 may be further reduced, thereby improving the effective utilization of the display screen 110, reducing the overall weight of the display device 10, and improving user experience.

In some other embodiments, the minimum value of the distance between the third outline 123 and the main optical axis O of the optical element 120 is less than the minimum value of the distance between the second outline 122 and the main optical axis O of the optical element 120, and at the same time, the minimum value of the distance between the fourth outline 124 and the main optical axis O of the optical element 120 is less than the minimum value of the distance between the second outline 122 and the main optical axis O of the optical element 120. That is, the upper and lower sides of the optical element 120 may be cut with special shapes, so that the size of the optical element 120 may be further reduced. Therefore, on a condition that the optical machine 100 has a sufficient vertical FOV angle, the size of the optical element 120 may be further reduced, thereby reducing the overall weight of the display device 10 and improving user experience.

In addition, the optical machine 100 includes a lens barrel, and the display screen 110 and the optical element 120 are installed in the lens barrel. When the first outline 121 and at least one of the third outline 123 and the fourth outline 124 of the optical element 120 are cut with special shapes, and when the first lateral surface 111 and at least one of the third lateral surface 113 and the fourth lateral surface 114 of the display screen 110 are cut with special shapes, a size of the lens barrel for installing the display screen 110 and the optical element 120 may also be reduced, thereby reducing the size of the entire optical machine 100. Therefore, a smaller-sized optical machine 100 may be used under the same horizontal FOV angle, that is, a larger horizontal FOV angle may be obtained under the same sized optical machine 100, thereby improving the immersive experience.

It should be noted that a value relationship between the distance between the third outline 123 and the main optical axis O of the optical element 120 and the distance between the fourth outline 124 and the main optical axis O of the optical element 120, that is, specific shapes of the third outline 123 and the fourth outline 124, may be designed and adjusted according to the actual requirements of the vertical FOV angle of the optical machine 100, as long as the user has a better immersive experience, and there is no special limitation here.

Optionally, as illustrated in FIG. 5, a second notch 116 is formed at a junction of the fourth lateral surface 114 and the first lateral surface 111, that is, the second notch 116 is formed in an upper right corner corresponding to the observation area of the human eye (left eye), and this area corresponds to the inner side of the observation area of the human eye (left eye) near the area where the nose is located. Correspondingly, a position of the optical element 120 corresponding to the second notch 116 may also be further cut with a special shape. By forming the second notch 116 at the upper right corner of the display screen 110 and the optical element 120, it will not affect the overall horizontal FOV angle and vertical FOV angle of the optical machine 100, and may further reduce the size of the display screen 110 and the size of the optical element 120, thereby improving the effective utilization rate of the display screen 110 and reducing the overall weight of the display device 10.

In some embodiments, as illustrated in FIG. 3, a third notch 117 is formed at a junction of the fourth lateral surface 114 and the second lateral surface 112, that is, the third notch 117 is formed in a lower left corner corresponding to the observation area of the human eye (left eye). Since this area corresponds to an outer side of the observation area of the human eye (left eye), in order to avoid affecting the overall horizontal FOV angle, the third notch 117 after cut with a special shape is still located outside the dotted circle b. Correspondingly, a position of the optical element 120 corresponding to the third notch 117 may also be cut with a special shape, so as to further reduce the size of the display screen 110 and the size of the optical element 120, thereby improving the effective utilization rate of the display screen 110 and reducing the overall weight of the display device 10.

In some other embodiments, as illustrated in FIG. 3, a fourth notch 118 is formed at a junction of the third lateral surface 113 and the second lateral surface 112, that is, the fourth notch 118 is formed at an upper left corner corresponding to the observation area of the human eye (left eye). Since this area corresponds to the outer side of the observation area of the human eye (left eye), in order to avoid affecting the overall horizontal FOV angle, the fourth notch 118 after cut with a special shape is still located outside the dotted circle b. Correspondingly, a position of the optical element 120 corresponding to the fourth notch 118 may also be cut with a special shape, so as to further reduce the size of the display screen 110 and the size of the optical element 120, thereby improving the effective utilization rate of the display screen 110 and reducing the overall weight of the display device 10.

In some other embodiments, two or three of the junction of the fourth lateral surface 114 and the first lateral surface 111, the junction of the fourth lateral surface 114 and the second lateral surface 112, and the junction of the third lateral surface 113 and the second lateral surface 112 are each provided with a notch, that is, notches are formed at two or three of the upper right corner, the lower left corner, and the upper left corner of the display screen 110. Herein, on a condition that the lower right corner, the upper right corner, the lower left corner, and the upper left corner of the display screen 110 are all provided with notches, an overall cross-section at the display side of the display screen 110 may be a regular octagon.

It should be noted that the positions and specific shapes of the notches formed on the display 110 may be designed and adjusted according to the requirements on all FOV angles of the optical machine 100. It is only necessary to reduce the size of the display 110 and the size of the corresponding optical element 120 while ensuring the immersive experience, and there is no special limitation here.

Optionally, as illustrated in FIG. 2, the first outline 121, the second outline 122, the third outline 123, and the fourth outline 124 may be arc-shaped, and curvatures of the first outline 121, the second outline 122, the third outline 123, and the fourth outline 124 are different. That is, the first outline 121, the third outline 123, and the fourth outline 124 may correspondingly take orthographic projections of the first lateral surface 111, the third lateral surface 113, and fourth lateral surface 114 on the optical element 120 as chord lines to cut with special shapes, so as to ensure the effective utilization of the display screen 110 while reducing the size of the optical element 120. In addition, by arranging the first outline 121, the second outline 122, the third outline 123, and the fourth outline 124 as arcs, corresponding stress generated during the special-shaped cutting process may be reduced, thereby ensuring the optical stability and the structural stability of the optical element 120.

It should be noted that the curvatures of the first outline 121, the second outline 122, the third outline 123, and the fourth outline 124 may be designed according to the design requirements of the horizontal FOV angle and the vertical FOV angle and the shape of the display screen 110 after cut with special shapes. It only needs to ensure that the arc design of the first outline 121, the second outline 122, the third outline 123, and the fourth outline 124 may meet the requirements of the FOA angles.

In some embodiments, as illustrated in FIG. 3, the first outline 121, the third outline 123, and the fourth outline 124 are straight lines, the second outline 122 is arc-shaped, and a curvature center of the second outline 122 is located on the main optical axis O of the optical element 120. That is, a center of an arc projection of the second outline 122 in the direction of the main optical axis O is on the main optical axis O. Projections of the first outline 121, the third outline 123, and the fourth outline 124 in the direction of the main optical axis O are straight lines corresponding to the first lateral surface 111, the third lateral surface 113, and the fourth lateral surface 114. This special-shaped cutting method may further reduce the size of the optical element 120 to reduce the overall weight of the display device 10.

Herein, an arc 125 is connected between the first outline 121 and the third outline 123, and another arc 125 is connected between the first outline 121 and the fourth outline 124. That is, one arc 125 is used for smooth transition between the first outline 121 and the third outline 123, and another arc 125 is used for smooth transition between the first outline 121 and the fourth outline 124, so as to avoid stress concentration at the junction of the first outline 121 and the third outline 123 and at the junction of the first outline 121 and the fourth outline 124 during the special-shaped cutting process, thereby ensuring the optical stability and the structural stability of the optical element 120.

It should be noted that the specific shapes of the first outline 121, the second outline 122, the third outline 123, and the fourth outline 124 may be designed and adjusted according to the shape of the display screen 110 and the requirement on the FOV angle of the optical machine 100, and there are no special restrictions here.

Optionally, in the direction along the main optical axis O of the optical element 120, an orthographic projection of the display screen 110 on the optical element 120 is located within the optical element 120, that is, an area enclosed by the first outline 121, the second outline 122, the third outline 123, and the fourth outline 124 of the optical element 120 overlaps the projection of the display screen 110 on the optical element 120. This structural design helps to achieve maximum utilization of the display screen 110 under the condition of the same FOA angle.

In some embodiments, a minimum value of a distance between the fourth outline 124 and the main optical axis O of the optical element 120 is less than a minimum value of a distance between the third outline 123 and the main optical axis O of the optical element 120. According to the visual characteristics of the two human eyes, in the actual observation process, a viewing angle of the upper side (corresponding to the fourth outline 124) of the human eye is less than a viewing angle of the lower side (corresponding to the third outline 123). By arranging the minimum value of the distance between the fourth outline 124 and the main optical axis O of the optical element 120 less than the minimum value of the distance between the third outline 123 and the main optical axis O of the optical element 120, the size of the optical element 120 may be further reduced while ensuring a sufficient vertical FOA angle, thereby reducing the overall weight of the display device 10.

Optionally, the optical element 120 has an optical center Q, and the main optical axis O of the optical element 120 passes through the optical center Q. A first connecting line L is defined to connect the optical centers Q of the optical elements 120 of the two optical machines 100, and a second connecting line N is defined to connect the geometric centers P of the display screens 110 of the two optical machines 100. The first connecting line L is parallel to the second connecting line N, that is, the two optical machines 100 have the same special-shaped cutting modes and are arranged symmetrically.

Herein, the main optical axis O of the optical element 120 passes through the second connecting line N, that is, the main optical axes O of the two optical elements 120 and the second connecting line N are located in a same plane. The upper and lower sides of the display screen 110 are not specially cut, or are symmetrically cut with special shapes, that is, the third outline 123 and the fourth outline 124 are arranged symmetrically, which may simplify the special-shaped cutting method of the display screen 110 and also help to improve the aesthetics of the display screen 110.

Alternatively, the main optical axis O of the optical element 120 and the second connecting line N form an angle and do not intersect, that is, the second connecting line N is parallel to the plane where the main optical axes O of the two optical elements 120 are located. Only one of the upper and lower sides of the display screen 110 is cut with a special shape, or the upper and lower sides of the display screen 110 are asymmetrically cut with special shapes, that is, the third outline 123 and the fourth outline 124 are asymmetrically arranged. This arrangement enables the third outline 123 and the fourth outline 124 to optimize the design according to the visual characteristics of the human body, so as to realize the maximum utilization of the display screen 110 and the optical element 120 while meeting the requirements of the FOA angles.

In some embodiments, in a viewing direction along the first direction X, the sum of the FOV angles at the observation points S corresponding to the two optical machines 100 is greater than or equal to 120°. That is, after a single display image of the display screen 110 is magnified by the corresponding optical element 120, the angle between the line connecting the outer edge of the magnified image 130 and the observation point S and the main optical axis O of the optical element 120 is greater than or equal to 60°; and after two display images of the display screens 110 are correspondingly magnified by the optical elements 120, the sum of the angles between two lines and the main optical axis O of the optical element 120 is greater than or equal to 120°, and the two lines each connects the outer edge of a corresponding one of the magnified images 130 and the observation point S, so that users may have a better immersive experience.

Specifically, in the actual production process, the sum of the FOA angles at the observation points S corresponding to the two optical machines 100 in the observation direction along the first direction X may be defined to α=120°, 125°, or 130°, etc., and a specific value of the sum of the FOA angles may be adjusted according to the actual use requirements, as long as the requirements of the immersive experience are met, and there is no special limitation here.

In some other embodiments, in the observation direction along the first direction X, an overlapped image angle of the FOV angles at the observation points S corresponding to the two optical machines 100 is greater than or equal to 80°. That is, after a single display image of the display screen 110 is magnified by the corresponding optical element 120, an angle between a line connecting the inner edge of the magnified image 130 and the observation point S and the main optical axis O of the optical element 120 is greater than or equal to 40°; and after two display images of the display screens 110 are correspondingly magnified by the optical elements 120, the sum of the angles between two lines and the main optical axis O of the optical element 120 is greater than or equal to 80°, and the two lines each connects the inner edge of a corresponding one of the magnified images 130 and the observation point S. Herein, a value of the overlapped image angle represents an area of a stereoscopic vision region, and a better immersive experience may be obtained by arranging the overlapped image angle to be greater than or equal to 80°.

Specifically, in the actual production process, the overlapped image angle of the FOV angles at the observation points S corresponding to the two optical machines 100 in the observation direction along the first direction X may be defined to β=80°, 90°, or 100°, etc., and a specific value of the overlapped image angle may be adjusted according to the actual use requirements, as long as the requirements of the immersive experience are met, and there is no special limitation here.

In some other embodiments, in a viewing direction along the second direction Y, the FOV angles at the observation points S corresponding to the two optical machines 100 are greater than or equal to 90°. That is, after a single display image of the display screen 110 is magnified by the corresponding optical element 120, an angle between the main optical axis O of the optical element 120 and a line connecting the upper or lower edge of the magnified image 130 and the observation point S is greater than or equal to 45°; and after two display images of the display screen 110 are correspondingly magnified by the optical elements 120, the sum of the angles between two lines and the main optical axis O of the optical element 120 is greater than or equal to 90°, and the two lines each connects the upper or lower edge of the magnified image 130 and the observation point S, so that the user may have a better immersive experience.

Specifically, in the actual manufacturing process, the sum of the FOA angles at the observation points S corresponding to the two optical machines 100 in the observation direction along the second direction Y may be defined to 90°, 95°, or 100°, etc., and a specific value of the sum of the f FOA angles may be adjusted according to actual use requirements, as long as the requirements of the immersive experience are met, and there is no special limitation here.

The above is a detailed introduction to display devices according to the embodiments of the present disclosure. In this paper, specific examples are used to illustrate the principles and implementation methods of the present disclosure. The descriptions of the above embodiments are only used to help understand the solutions and the core idea of the present disclosure. At the same time, for those skilled in the art, based on the idea of the present disclosure, there will be changes in the specific implementation and application scope. In summary, the contents of the specification should not be construed as limiting the present disclosure.

## Claims

1. A display device, comprising two optical machines arranged side by side along a first direction, and each of the optical machines comprising:
a display screen, having a first lateral surface and a second lateral surface oppositely arranged along the first direction, wherein the first lateral surface is adjacent to the other one of the optical machines; and
an optical element, disposed on a display side of the display screen, configured to process display images of the display screen and transmit them to a corresponding observation point, and having a first outline and a second outline oppositely arranged along the first direction, wherein the first outline is adjacent to the other one of the optical machines,
wherein a main optical axis of the optical element passes through the display screen, and is disposed on a side of a geometric center of the display screen adjacent to the other one of the optical machines; and a minimum value of a distance between the first outline and the main optical axis of the optical element is less than a minimum value of a distance between the second outline and the main optical axis of the optical element.

2. The display device according to claim 1, wherein a minimum value of a distance between the first lateral surface and the main optical axis of the optical element is less than a minimum value of a distance between the second lateral surface and the main optical axis of the optical element.

3. The display device according to claim 1, wherein the display screen has a third lateral surface and a fourth lateral surface oppositely arranged along a second direction; the third lateral surface is connected between the first lateral surface and the second lateral surface, the fourth lateral surface is connected between the first lateral surface and the second lateral surface, and the second direction forms an angle with the first direction; and a first notch is defined at a junction of the third lateral surface and the first lateral surface.

4. The display device according to claim 3, wherein the optical element has a third outline and a fourth outline oppositely arranged along the second direction; the third outline is connected between the first outline and the second outline, and the fourth outline is connected between the first outline and the second outline; and a minimum value of a distance between the third outline and the main optical axis of the optical element is less than a minimum value of a distance between the second outline and the main optical axis of the optical element.

5. The display device according to claim 3, wherein the optical element has a third outline and a fourth outline oppositely arranged along the second direction; the third outline is connected between the first outline and the second outline, and the fourth outline is connected between the first outline and the second outline; and a minimum value of a distance between the fourth outline and the main optical axis of the optical element is less than a minimum value of a distance between the second outline and the main optical axis of the optical element.

6. The display device according to claim 3, wherein a second notch is defined at a junction of the fourth lateral surface and the first lateral surface.

7. The display device according to claim 3, wherein a third notch is defined at a junction of the fourth lateral surface and the second lateral surface.

8. The display device according to claim 3, wherein a fourth notch is defined at a junction of the third lateral surface and the second lateral surface.

9. The display device according to claim 3, wherein a connection surface formed by the first notch is 145° to the first lateral surface.

10. The display device according to claim 3, wherein a connection surface formed by the first notch is 145° to the third lateral surface.

11. The display device according to claim 3, wherein a cross-section of the display screen is a regular octagon.

12. The display device according to claim 4, wherein the first outline, the second outline, the third outline, and the fourth outline are arc-shaped, and curvatures of the first outline, the second outline, the third outline, and the fourth outline are different.

13. The display device according to claim 4, wherein the first outline, the third outline, and the fourth outline are straight lines, the second outline is arc-shaped, and a curvature center of the second outline is located on the main optical axis of the optical element; and an arc is connected between the first outline and the third outline, and another arc is connected between the first outline and the fourth outline.

14. The display device according to claim 1, wherein in a direction along the main optical axis of the optical element, an orthographic projection of the display screen on the optical element is located within the optical element.

15. The display device according to claim 4, wherein a minimum value of a distance between the fourth outline and the main optical axis of the optical element is less than the minimum value of the distance between the third outline and the main optical axis of the optical element.

16. The display device according to claim 1, wherein the optical element has an optical center, and the main optical axis of the optical element passes through the optical center; a first connecting line is defined to connect optical centers of optical elements of the two optical machines, a second connecting line is defined to connect geometric centers of display screens of the two optical machines, and the first connecting line is parallel to the second connecting line; and the main optical axis of the optical element passes through the second connecting line.

17. The display device according to claim 1, wherein the optical element has an optical center, and the main optical axis of the optical element passes through the optical center; a first connecting line is defined to connect optical centers of optical elements of the two optical machines, a second connecting line is defined to connect geometric centers of display screens of the two optical machines, and the first connecting line is parallel to the second connecting line; and the main optical axis of the optical element and the second connecting line form an angle and are non-intersected.

18. The display device according to claim 1, wherein in a viewing direction along the first direction, a sum of field-of-view (FOV) angles at corresponding observation points of the two optical machines is greater than or equal to 120°.

19. The display device according to claim 1, wherein in a viewing direction along the first direction, an overlapped image angle of FOV angles at corresponding observation points of the two optical machines is greater than or equal to 80°.

20. The display device according to claim 1, wherein in a viewing direction along the second direction, a sum of FOV angles at corresponding observation points of the two optical machines is greater than or equal to 90°.
